# NOUVEAU FASCICULE DE BREVET EUROPEEN

(11) **EP 2 726 375 B2**
(45) Date de publication et mention de la décision concernant l'opposition: **08.05.2019**
(45) Mention de la délivrance du brevet: 06.04.2016
(21) Numéro de dépôt: 12734985.0
(22) Date de dépôt: 25.06.2012
(51) Int. Cl.: F17C 13/00, F02K 9/60, B64G 1/40

(54) **RÉSERVOIR DE FLUIDE CRYOGÉNIQUE ET SON UTILISATION**
KRYOGENER FLÜSSIGKEITSTANK UND SEINE VERWENDUNG
CRYOGENIC FLUID TANK AND ITS USE

(30) Priorité: 01.07.2011 FR 1155948
(43) Date de publication de la demande: 07.05.2014
(73) Titulaire: L'Air Liquide Société Anonyme pour l'Etude et l'Exploitation des Procédés Georges Claude, 75007 Paris (FR); Centre National d'Etudes Spatiales, 75039 Paris Cedex 01 (FR)
(72) Inventeur: QUEMERAIS, Sophie, F-38360 Sassenage (FR); BARBIER, François, F-38700 La Tronche (FR)
(74) Mandataire: De Cuenca, Emmanuel Jaime
(86) Numéro de dépôt international: PCT/FR2012/051449
(87) Numéro de publication internationale: WO 2013/004942

(56) Documents cités:
- EP-A1- 0 060 169
- EP-A1- 1 279 884
- EP-A1- 1 279 885
- EP-A2- 1 517 078
- EP-A2- 1 645 793
- EP-A2- 2 390 549
- EP-B1- 2 340 205
- WO-A1-2005/075881
- FR-A1- 2 698 150
- FR-A1- 2 825 135
- FR-A1- 2 932 243
- FR-B1- 2 876 438
- US-A- 3 929 247
- US-A- 3 930 375
- US-A- 4 874 649
- US-A- 5 018 634
- US-A- 5 085 343
- US-A- 5 419 139
- US-A1- 2004 060 304

## Description

La présente invention concerne un réservoir pour fluide cryogénique de lanceur spatial et son utilisation.

L'invention concerne plus particulièrement un réservoir de fluide cryogénique pour lanceur spatial comprenant au moins une paroi délimitant un volume de stockage pour du fluide cryogénique, ladite paroi étant munie, sur au moins une partie de sa surface intérieure, d'une d'isolation thermique comprenant une couche dite supérieure destinée à être en contact avec le fluide stocké dans le volume de stockage.

Le document FR 2 825 135 A1 décrit un réservoir avec une structure d'isolation externe.

L'invention concerne un dispositif d'isolation thermique pour réservoirs cryogéniques de lanceurs spatiaux, notamment pour les réservoirs d'hydrogène liquide. L'isolation peut s'appliquer aux réservoirs dits à fond commun entre deux volumes de stockage prévus pour deux fluides distincts (hydrogène et oxygène par exemple), pour lequel une isolation doit être mise sur la paroi séparant les deux volumes, du côté d'un des fluides (côté hydrogène par exemple).

L'invention peut également s'appliquer à l'isolation interne pour réservoir de lanceurs spatiaux réutilisables pour lesquels, du fait de la présence d'une isolation thermique externe (dite chaude) prévue pour la phase de réentrée atmosphérique, il est préférable de placer l'isolation cryogénique (dite froide) à l'intérieur du réservoir, notamment sur les zones cylindriques du réservoir.

Une solution d'isolation connue pour ce type de réservoir consiste à disposer une couche d'isolant à structure en nid d'abeille entre deux parois et à prévoir une isolation sous vide de cette structure. Cette solution est cependant coûteuse et complexe, en particulier pour les réservoirs de grande taille.

Une autre solution connue consiste à disposer, sur la surface interne des réservoirs, une couche d'isolant ayant une structure de mousse étanche et rigide. Cette isolation rigide étanche est par exemple celle désignée par la référence H920A de la société l'Air Liquide.

Cette dernière solution isole de façon satisfaisante les réservoirs mais peut présenter des inconvénients lorsque la couche d'isolant est soumise à des températures très basses (20K par exemple) pendant des durées relativement longues (plusieurs heures). En effet, la demanderesse a constaté que, du fait de la contraction thermique relative entre la paroi du réservoir (alliage d'aluminium en général) et la mousse d'isolation (soumise à une température telle que 20 K par exemple), et du fait du très faible allongement admissible de cette mousse, des fissures sont susceptibles de se produire au sein de la structure isolante. Ces fissures dégradent les performances d'isolation du réservoir, notamment par circulation de liquide cryogénique dans ces fissures

Un but de la présente invention est de pallier tout ou partie des inconvénients de l'art antérieur relevés ci-dessus.

A cette fin, le réservoir selon l'invention, par ailleurs conforme à la définition générique qu'en donne le préambule ci-dessus, est essentiellement caractérisé en ce que le matériau isolant de la couche supérieure est complètement encapsulé dans une enveloppe étanche c'est-à-dire que le matériau isolant est recouvert par l'enveloppe étanche sur toute sa surface.

Par ailleurs, des modes de réalisation de l'invention peuvent comporter l'une ou plusieurs des caractéristiques suivantes :
- lorsque la couche supérieure est exposée à une température ambiante de l'ordre de 20°C, le matériau isolant de la couche supérieure est encapsulé dans l'enveloppe étanche à une pression inférieure à la pression atmosphérique,
- lorsque la couche supérieure est exposée à une température ambiante de l'ordre de 20°C, le matériau isolant de la couche supérieure est encapsulé dans l'enveloppe étanche sous vide à une pression comprise entre 10⁻⁴ mbar et 100 mbar,
- lorsque la couche supérieure est exposée à une température ambiante de l'ordre de 20°C, le matériau isolant de la couche supérieure est encapsulé dans l'enveloppe étanche à la pression atmosphérique
- le matériau isolant de la couche supérieure est encapsulé dans l'enveloppe étanche sous une atmosphère d'air et/ou de l'un au moins des gaz suivants : azote, dioxyde de carbone (CO2), néon,
- le matériau isolant de la couche supérieure comprend l'un au moins parmi : des microsphères de verre, des aérogels sous forme de poudre, granules ou couvertures, un matériau cellulaire à cellules ouvertes ou fermées,
- la couche supérieure est flexible ou semi-rigide,
- la couche supérieure est collée directement sur la face interne de la paroi du réservoir,
- la couche supérieure est collée sur la face interne d'une couche d'isolation dite inférieure,
- la couche d'isolation inférieure est collée directement sur la face interne de la paroi du réservoir,
- la couche d'isolation inférieure est rigide ou semi-rigide et comprend au moins l'un des matériaux suivants : du PVC, du PEI, du PU,
- à pression atmosphérique, la couche supérieure a une épaisseur comprise entre 10 et 40mm et de préférence entre 15 et 30mm,
- la paroi est métallique, en alliage d'aluminium ou en matériau composite,
- la paroi délimite un volume de stockage interne par rapport au volume chaud extérieur au réservoir,
- le réservoir est du type à fond commun comportant deux volumes de stockage cryogéniques internes distincts destinés à stocker séparément des liquides distincts, ladite paroi étant une paroi inter-volumes délimitant le premier volume de stockage intérieur par rapport au second volume de stockage intérieur,
- la couche d'isolation inférieure a une épaisseur comprise entre 5 et 60mm et de préférence entre 10 mm et 30 mm,
- l'enveloppe étanche de la couche (2) supérieure comprend au moins l'un parmi les matériaux suivants : PE (polyéthylène), PET (polyéthylène téréphtalate), PA (polyamide), PI, PTFE (Polytetrafluoréthylène), film aluminisé et a une épaisseur comprise entre 0.015 mm et 1,5 mm

L'invention concerne également une utilisation d'un réservoir selon l'une quelconque des caractéristiques précédentes pour stocker un fluide cryogénique, le fluide étant stocké dans le réservoir à une pression comprise entre 3 bar et 5bar.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en coupe partielle et schématique illustrant l'agencement d'un dispositif d'isolation dans un réservoir à fond commun selon un premier exemple de réalisation de l'invention,
- la figure 2 représente une vue agrandie d'un détail de la figure 1 illustrant l'agencement de l'isolation sur une paroi du réservoir,
- la figure 3 représente une vue en coupe partielle et schématique illustrant l'agencement d'un dispositif d'isolation dans un réservoir selon un deuxième exemple de réalisation de l'invention.

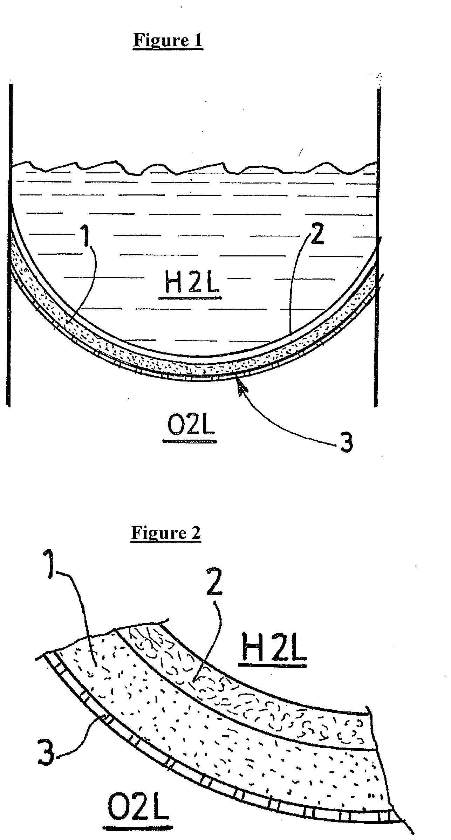

En se référant à la figure 1, au moins la paroi 3 d'un réservoir cryogénique comprend, sur sa surface intérieure en communication avec du liquide cryogénique stocké dans le réservoir (H2L), une isolation thermique.

Dans l'exemple de réalisation représenté aux figures 1 et 2, cette structure d'isolation est disposée sur une face d'une paroi 3 interne séparant deux volumes de stockages adjacents d'un même réservoir. Un tel réservoir à fond commun permet de stocker séparément deux fluides distincts (par exemple de l'hydrogène liquide (H2L) et de l'oxygène liquide (O2L). Le dispositif d'isolation est disposé sur la face de la paroi située du côté de l'hydrogène liquide (plus froid).

Cette structure d'isolation thermique comprend une couche 2 supérieure fixée sur une couche 1 isolante inférieure, la couche inférieure 1 étant elle-même fixée sur la face interne de la paroi 3 du réservoir.

La couche 1 inférieure comprend par exemple une mousse de PVC collée sur la paroi 3. Cette couche 1 inférieure en isolant rigide, le cas échéant, a une épaisseur comprise par exemple entre 5 et 60 mm.

La couche 2 supérieure est constituée d'un matériau isolant encapsulé dans une enveloppe étanche. Cette couche 2 supérieure permet d'obtenir une isolation thermique très performante car le fluide cryogénique n'y pénètre pas.

De préférence, sans que ce soit limitatif pour autant, l'isolant de cette couche 2 supérieure est encapsulé sous dépression ou sous vide dans l'enveloppe étanche.

Lorsque le réservoir est rempli de liquide cryogénique (azote liquide, hydrogène liquide, ou autre), tout ou partie du gaz résiduel présent dans l'enveloppe de la couche 2 supérieure se trouve condensé, voire « cryopompé ». Ceci permet de créer ou d'accroître une dépression au sein de la couche 2 supérieure (dans l'enveloppe étanche).

La couche 2 supérieure a une épaisseur comprise par exemple entre 10 et 40 mm (avant mise sous vide ou sous dépression) et de préférence comprise entre 15 et 30 mm.

De cette façon, le matériau isolant dans l'enveloppe étanche se trouve sous dépression ou sous vide relatif. Ceci permet de conférer à l'ensemble de très bonnes performances isolantes. En effet, ceci permet d'élever la température en surface de la couche 1 d'isolation inférieure.

Cette architecture permet d'obtenir une contraction différentielle réduite entre d'une part la paroi 3 du réservoir et, d'autre part, la couche 1 d'isolation inférieure, cette dernière étant de préférence rigide.

L'allongement à rupture de la couche 1 inférieure étant également plus élevé, la couche 2 supérieure permet ainsi de limiter les risques de fissure dans la couche 1 inférieure.

Dans l'exemple décrit ci-dessus, la couche 2 supérieure comprend un matériau isolant complètement encapsulé dans une enveloppe étanche.

L'enveloppe étanche de la couche 2 supérieure comprend au moins l'un parmi les matériaux suivants : PE, PET, PA, PI, PTFE, film aluminisé et a une épaisseur comprise entre 0.015 mm et 1.5 mm.

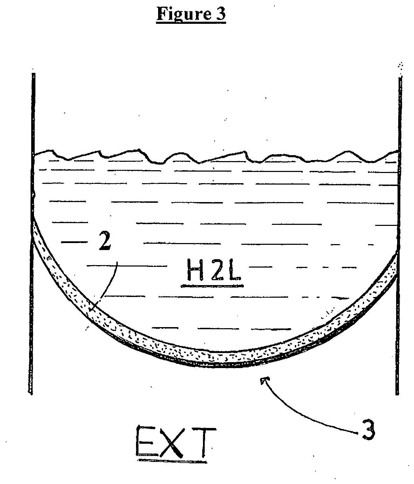

Le mode de réalisation de la figure 3 se distingue de celui des figures 1 et 2 uniquement en ce que l'isolation ne comprend pas de couche 1 inférieure. C'est-à-dire que la couche 2 supérieure est collée directement sur la face interne de la paroi 3.

Dans les exemples des figures 1 à 3, l'isolation (couche 2 supérieure éventuellement associée à une couche 1 inférieure) est positionnée du côté concave de la paroi séparant deux volumes de stockage d'un même réservoir (cas d'un fond commun). Bien entendu, il est possible également de prévoir cette isolation du côté convexe de la paroi.

De même, la structure d'isolation décrite ci-dessus est également particulièrement adaptée pour former une isolation optimale entre l'intérieur d'un réservoir contenant de l'hydrogène liquide (H2L) (ou tout autre liquide cryogénique) et l'extérieur (EXT, cf. figure 3).

Tout en étant de structure simple et peu coûteuse, l'invention permet d'isoler efficacement les réservoirs de lanceurs spatiaux.

## Revendications

1. Réservoir de fluide cryogénique pour lanceur spatial comprenant au moins une paroi (3) délimitant un volume de stockage pour du fluide cryogénique, ladite paroi (3) étant munie, sur au moins une partie de sa surface intérieure, d'une d'isolation thermique comprenant une couche (2) dite supérieure destinée à être en contact avec le fluide stocké dans le volume de stockage, la couche (2) supérieure comprend un matériau isolant recouvert, sur sa face destinée à être en contact avec le fluide cryogénique stocké dans le réservoir, d'une enveloppe étanche formant une barrière étanche entre le fluide cryogénique stocké et le matériau isolant, **caractérisé en ce que** le matériau isolant de la couche (2) supérieure est complètement encapsulé dans une enveloppe étanche, c'est-à-dire que le matériau isolant est recouvert par l'enveloppe étanche sur toute sa surface.

2. Réservoir selon la revendication 1 **caractérisé en ce que**, lorsque la couche (2) supérieure est exposée à une température ambiante de l'ordre de 20°C, le matériau isolant de la couche (2) supérieure est encapsulé dans l'enveloppe étanche à une pression inférieure à la pression atmosphérique.

3. Réservoir selon la revendication 1, **caractérisé en ce que,** lorsque la couche (2) supérieure est exposée à une température ambiante de l'ordre de 20°C, le matériau isolant de la couche (2) supérieure est encapsulé dans l'enveloppe étanche sous vide à une pression comprise entre 10⁻⁴ mbar et 100 mbar.

4. Réservoir selon la revendication 1, **caractérisé en ce que**, lorsque la couche (2) supérieur est exposée à une température ambiante de l'ordre de 20°C, le matériau isolant de la couche (2) supérieure est encapsulé dans l'enveloppe étanche à la pression atmosphérique.

5. Réservoir selon l'une quelconque des revendications 1 à 4, **caractérisé en ce que** le matériau isolant de la couche (2) supérieure est encapsulé dans l'enveloppe étanche sous une atmosphère d'air et/ou de l'un au moins des gaz suivants : azote, dioxyde de carbone (CO2), néon.

6. Réservoir selon l'une quelconque des revendications 1 à 5, **caractérisé en ce que** le matériau isolant de la couche (2) supérieure comprend l'un au moins parmi : des microsphères de verre, des aérogels sous forme de poudre, granules ou couvertures, un matériau cellulaire à cellules ouvertes ou fermées.

7. Réservoir selon l'une quelconque des revendications 1 à 6, **caractérisé en ce que** la couche (2) supérieure est flexible ou semi-rigide.

8. Réservoir selon l'une quelconque des revendications 1 à 7, **caractérisé en ce que** la couche (2) supérieure est collée directement sur la face interne de la paroi (3) du réservoir.

9. Réservoir selon l'une quelconque des revendications 1 à 7, **caractérisé en ce que** la couche (2) supérieure est collée sur la face interne d'une couche (1) d'isolation dite inférieure.

10. Réservoir selon la revendication 9, **caractérisé en ce que** la couche (1) d'isolation inférieure est collée directement sur la face interne de la paroi (3) du réservoir.

11. Réservoir selon la revendication 9 ou 10 **caractérisé en ce que** la couche (1) d'isolation inférieure est rigide ou semi-rigide et comprend au moins l'un des matériaux suivants : du PVC, du PEI, du PU.

12. Réservoir selon l'une quelconque des revendications 1 à 11, **caractérisé en ce que**, à pression atmosphérique, la couche (2) supérieure a une épaisseur comprise entre 10 et 40mm et de préférence entre 15 et 30mm.

13. Réservoir selon l'une quelconque des revendications 1 à 12, **caractérisé en ce que** l'enveloppe étanche de la couche (2) supérieure comprend au moins l'un des matériaux suivants : PE, PET, PA, PI, PTFE, un film aluminisé et a une épaisseur comprise entre 0.015 mm et 1.5mm.

14. Utilisation d'un réservoir selon l'une quelconque des revendications précédentes pour stocker un fluide cryogénique, **caractérisé en ce que** le fluide est stocké dans le réservoir à une pression comprise entre 3 bar et 5 bar.

## Patentansprüche

1. Behälter für kryogenes Fluid für Trägerrakete, der mindestens eine Wand (3) umfasst, die ein Lagervolumen für kryogenes Fluid abgrenzt, wobei die Wand (3) auf mindestens einem Teil ihrer inneren Oberfläche mit einer Wärmeisolation versehen ist, die eine obere genannte Schicht (2) umfasst, die dazu bestimmt ist, mit dem in dem Lagervolumen gelagerten Fluid in Berührung zu sein, wobei die obere Schicht (2) ein isolierendes Material umfasst, das auf seiner Seite, die dazu bestimmt ist, mit dem kryogenen Fluid, das in dem Behälter gelagert wird, in Kontakt zu sein, mit einem dichten Mantel abgedeckt ist, der eine dichte Barriere zwischen dem gelagerten kryogenen Fluid und dem isolierenden Material bildet, **dadurch gekennzeichnet, dass** das isolierende Material der oberen Schicht (2) vollständig in einem dichten Mantel gekapselt ist, das heißt, dass das isolierende Material mit einem dichten Mantel auf seiner gesamten Oberfläche abgedeckt ist.

2. Behälter nach einem der Ansprüch 1, **dadurch gekennzeichnet, dass**, wenn die obere Schicht (2) einer Umgebungstemperatur in der Größenordnung von 20 °C ausgesetzt ist, das isolierende Material der oberen Schicht (2) in einem dichten Mantel mit einem Druck niedriger als der Luftdruck gekapselt ist.

3. Behälter nach Anspruch 1, **dadurch gekennzeichnet, dass**, wenn die obere Schicht (2) einer Umgebungstemperatur in der Größenordnung von 20 °C ausgesetzt ist, das isolierende Material der oberen Schicht (2) in dem dichten Mantel unter Vakuum mit einem Druck zwischen 10⁻⁴ mbar und 100 mbar gekapselt ist.

4. Behälter nach Anspruch 1, **dadurch gekennzeichnet, dass**, wenn die obere Schicht (2) einer Umgebungstemperatur in der Größenordnung von 20 °C ausgesetzt ist, das isolierende Material der oberen Schicht (2) in dem dichten Mantel bei Luftdruck gekapselt ist.

5. Behälter nach einem der Ansprüche 1 bis 4, **dadurch gekennzeichnet, dass** das isolierende Material der oberen Schicht (2) in einem dichten Mantel unter Luftatmosphäre und/oder mindestens einem der folgenden Gase gekapselt ist: Stickstoff, Kohlendioxid (CO₂), Neon.

6. Behälter nach einem der Ansprüche 1 bis 5, **dadurch gekennzeichnet, dass** das isolierende Material der oberen Schicht (2) Folgendes umfasst: Glasmikrokugeln und/oder Aerogele in Pulverform und/oder Granulat und/oder Decken und/oder ein Schaumaterial mit offenen oder geschlossenen Zellen.

7. Behälter nach einem der Ansprüche 1 bis 6, **dadurch gekennzeichnet, dass** die obere Schicht (2) biegsam oder halbstarr ist.

8. Behälter nach einem der Ansprüche 1 bis 7, **dadurch gekennzeichnet, dass** die obere Schicht (2) direkt auf die Innenseite der Wand (3) des Behälters geklebt ist.

9. Behälter nach einem der Ansprüche 1 bis 8, **dadurch gekennzeichnet, dass** die obere Schicht (2) auf die Innenseite einer untere genannten Isolationsschicht (1) geklebt ist.

10. Behälter nach Anspruch 9, **dadurch gekennzeichnet, dass** die untere Isolationsschicht (1) direkt auf die Innenseite der Wand (3) des Behälters geklebt ist.

11. Behälter nach Anspruch 9 oder 10, **dadurch gekennzeichnet, dass** die untere Isolationsschicht (1) starr oder halbstarr ist und mindestens eines der folgenden Materialien umfasst: PVC, PEI, PU.

12. Behälter nach einem der Ansprüche 1 bis 11, **dadurch gekennzeichnet, dass** die obere Schicht (2) bei Luftdruck eine Stärke zwischen 10 und 40 mm und vorzugsweise zwischen 15 und 30 mm hat.

13. Behälter nach einem der Ansprüche 1 bis 12, **dadurch gekennzeichnet, dass** der dichte Mantel der oberen Schicht (2) mindestens eines der folgenden Materialien umfasst: PE, PET, PA, PI, PTFE, eine aluminiumbeschichtete Folie, und eine Stärke zwischen 0,015 und 1,5 mm hat.

14. Verwendung eines Behälters nach einem der vorhergehenden Ansprüche zum Lagern von kryogenem Fluid, **dadurch gekennzeichnet, dass** das Fluid in dem Behälter bei einem Druck zwischen 3 bar und 5 bar gelagert ist.

## Claims

1. Cryogenic fluid tank for space launcher comprising at least one wall (3) delimiting a storage volume for cryogenic fluid, said wall (3) being provided, on at least one portion of its interior surface, with a thermal insulation comprising a so-called upper layer (2) intended to be in contact with the fluid stored in the storage volume, the upper layer (2) comprises an insulating material covered, on its face intended to be in contact with the cryogenic fluid stored in the tank, with a leaktight envelope forming a leaktight barrier between the cryogenic fluid stored and the insulating material, **characterised in that** the insulating material of the upper layer (2) is completely encapsulated in a leaktight envelope, i.e. the insulating material is covered by the leaktight envelope over its entire surface.

2. Tank according to claim 1, **characterised in that**, when the upper layer (2) is exposed to an ambient temperature of about 20°C, the insulating material of the upper layer (2) is encapsulated in the leaktight envelope at a pressure less than atmospheric pressure.

3. Tank according to claim 1, **characterised in that**, when the upper layer (2) is exposed to an ambient temperature of about 20°C, the insulating material of the upper layer (2) is encapsulated in the leaktight envelope in a vacuum at a pressure between 10⁻⁴ mbar and 100 mbar.

4. Tank according to claim 1, **characterised in that**, when the upper layer (2) is exposed to an ambient temperature of about 20°C, the insulating material of the upper layer (2) is encapsulated in the leaktight envelope at atmospheric pressure.

5. Tank according to any of claims 1 to 4, **characterised in that** the insulating material of the upper layer (2) is encapsulated in the leaktight envelope under an atmosphere of air and/or of one at least of the following gases: nitrogen, carbon dioxide (CO2), neon.

6. Tank according to any of claims 1 to 5, **characterised in that** the insulating material of the upper layer (2) comprises at least one among: glass microspheres, aerogels in the form of powder, granules or coverings, a cellular material with open or closed cells.

7. Tank according to any of claims 1 to 6, **characterised in that** the upper layer (2) is flexible or semi-rigid.

8. Tank according to any of claims 1 to 7, **characterised in that** the upper layer (2) is glued directly on the inner face of the wall (3) of the tank.

9. Tank according to any of claims 1 to 8, **characterised in that** the upper layer (2) is glued on the inner face of a so-called lower layer of insulation (1).

10. Tank according to claim 9, **characterised in that** the lower layer of insulation (1) is glued directly on the inner face of the wall (3) of the tank.

11. Tank according to claim 9 or 10 **characterised in that** the lower layer of insulation (1) is rigid or semi-rigid and comprises at least one of the following materials: PVC, PEI, PU.

12. Tank according to any of claims 1 to 11, **characterised in that**, at atmospheric pressure, the upper layer (2) has a thickness between 10 and 40mm and preferably between 15 and 30mm.

13. Tank according to any of claims 1 to 12, **characterised in that** the leaktight envelope of the upper layer (2) comprises at least one of the following materials: PE, PET, PA, PI, PTFE, an aluminised film and a thickness between 0.015 mm and 1.5mm.

14. Use of a tank as claimed in any preceding claim for storing a cryogenic fluid, **characterised in that** the fluid is stored in the tank at a pressure between 3 bar and 5 bar.
